# EUROPÄISCHE PATENTSCHRIFT

(11) **EP 1 272 080 B1**
(45) Veröffentlichungstag und Bekanntmachung des Hinweises auf die Patenterteilung: **24.01.2007**
(21) Anmeldenummer: 01927698.9
(22) Anmeldetag: 23.02.2001
(51) Int. Cl.: A47J 43/07, A47J 43/046

(54) **KÜCHENMASCHINE**
FOOD PROCESSOR
ROBOT MENAGER

(30) Priorität: 31.03.2000 DE 10016294
(43) Veröffentlichungstag der Anmeldung: 08.01.2003
(73) Patentinhaber: BSH Bosch und Siemens Hausgeräte GmbH, 81739 München (DE)
(72) Erfinder: PESEC, Jurij, 3301 Petrovce (SI); RUDEZ, Darko, 3230 Bentjur (SI); ZIBRET, Igor, 3327 Smartno ob Paki (SI); PAVLOVIC, Henrik, 333 Ljubno (SI)
(86) Internationale Anmeldenummer: PCT/EP2001/002083
(87) Internationale Veröffentlichungsnummer: WO 2001/074216

(56) Entgegenhaltungen:
- CH-A- 379 437
- DE-A- 19 737 130
- FR-A- 2 641 590
- NL-A- 7 300 339

## Beschreibung

Die Erfindung betrifft eine Küchenmaschine, mit einem in dessen Gehäuse eingebauten Antriebsaggregat zum Antrieb eines Wellenabtriebs, der mit einem Werkzeug koppelbar ist, das in einem Behältnis wie Mixbecher, Zerkleinerungsbecher oder dergleichen angeordnet ist, wobei das Behältnis auf der mit dem Wellenabtrieb versehenen Stelle des Gehäuses auf dieses aufsetzbar und das Werkzeug beim Aufsetzen des Behältnisses mit dem Wellenabtrieb koppelbar ist,

Bei einer auf dem Markt befindlichen Küchenmaschine kann auf deren Gehäuse an einer mit einem Wellenabtrieb versehenen Stelle ein Mixerglas oder ein Schlagbecher aufgesetzt werden. Beim Aufsetzen des Mixerglases bzw. des Schlagbechers wird dessen Werkzeug (Schlagmesser) mit dem Wellenabtrieb gekoppelt. Dazu muss das Mixerglas bzw. der Schlagbecher mit seinem Sockel in einer bestimmten Stellung an der Aufsetzstelle des Gehäuses angebracht werden. Dies gelingt häufig erst nach mehreren Versuchen, bis dann die richtige Stellung durch Zufall gefunden ist.

Eine gattungsgemäße Ankopplung von Gehäuse eines Antriebsaggregats und eines Behältnisses, wie bspw. eines Mixbechers ist aus NL 73 00 339 bekannt.

Der Erfindung liegt die Aufgabe zugrunde, eine Küchenmaschine der eingangs beschriebenen Art so weiterzubilden, dass das positionsrichtige Aufsetzen des Behältnisses auf das Gehäuse deutlich vereinfacht ist.

Die Lösung der gestellten Aufgabe gelingt nach der Erfindung dadurch, dass die Positionselemente wechselseitig am Gehäuse bzw. an dem Behältnis angeordnet und als axial vorstehender nasenartiger Vorsprung und dementsprechend am anderen Teil als Aufnahmeschlitz, der sich über eine dem Verdrehwinkel der Bajonettverbindung entsprechende Bogenlänge erstreckt, ausgebildet sind.

Durch die Positionselemente ist eine Bedienperson der Küchenmaschine die positionsrichtige Aufsetzstellung des Behältnisses auf das Gehäuse angezeigt, wodurch das Aufsetzen des Behältnisses in seiner richtigen Stellung auf Anhieb gelingt.

Bevorzugte, Ausführungsformen der Erfindung sind in den abhängigen Ansprüchen dargestellt.

Anhand eines in der Zeichnung dargestellten Ausführungsbeispieles wird die Erfindung nachfolgend noch näher erläutert. Es zeigt:

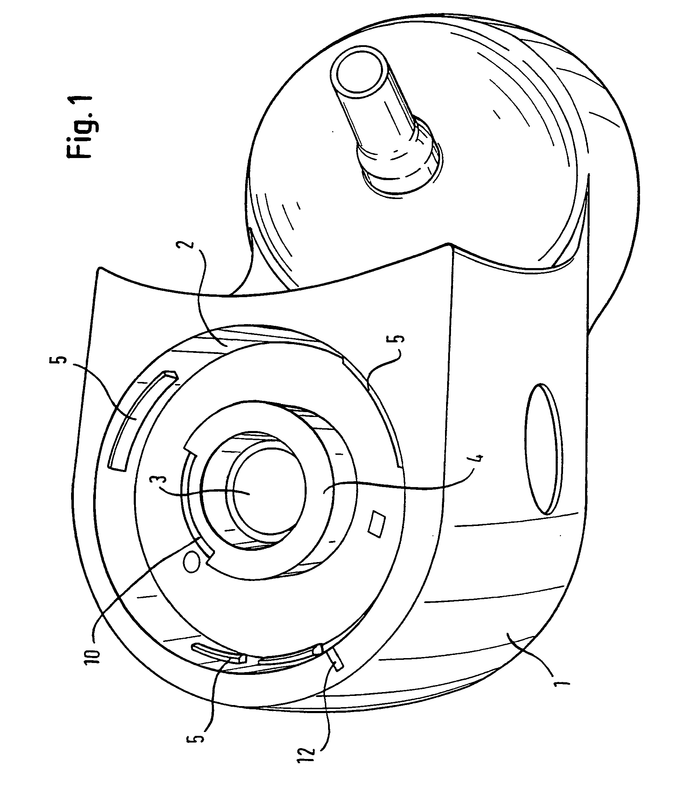

- Fig. 1: das Gehäuse einer Küchenmaschine in perspektivischer Draufsicht und

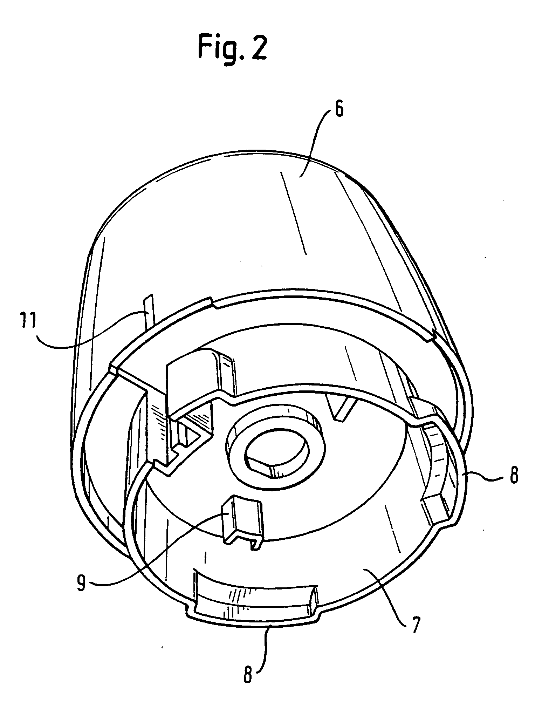

- Fig. 2: einen mit einem Wellenabtrieb der Küchenmaschine kuppelbaren Schlagbecher in perspektivischer Unteransicht.

An der Oberseite des Gehäuses 1 einer Küchenmaschine ist eine Aufnahmeöffnung 2 vorgesehen, in deren Mitte sich ein vom Antriebsmotor der Küchenmaschine angetriebener Wellenabtrieb 3 befindet. Der Wellenabtrieb 3 ist von einem Ringansatz 4 umgeben. Am Innenumfang der Aufnahmeöffnung 2 sind mehrere sich über eine bestimmte Bogenlänge erstreckende Vorsprünge 5 vorgesehen.

Ein Schlagbecher 6 weist an seinem in die Aufnahmeöffnung 2 einsteckbaren Sockel 7 ebenfalls mehrere segmentartige Vorsprünge 8 auf. Beim Aufsetzen des Schlagbechers 6 auf das Gehäuse 1 wird der Sockel 7 des Schlagbechers 6 in die Aufnahmeöffnung 2 eingeführt. Dabei wird der Schlagbecher 6 so verdreht, dass seine segmentartigen Vorsprünge 8 zwischen den Vorsprüngen 5 der Aufnahmeöffnung 2 hindurch passen. Die Vorsprünge 5 und 8 dienen zur Herstellung einer Bajonettverbindung zwischen dem Gehäuse 1 und dem Schlagbecher 6, wobei der Schlagbecher 6 so verdreht wird, dass seine segmentartigen Vorsprünge 8 die Vorsprünge 5 der Aufnahmeöffnung 2 untergreifen. Dadurch ist der Schlagbecher 6 in der Aufnahmeöffnung 2 fixiert.

Es kann nun aus irgendwelchen Gründen notwendig sein, dass der Schlagbecher 6 oder auch ein anderes Behältnis nur in einer bestimmten Stellung auf das Gehäuse 1 aufgesteckt werden darf. Um dies sicherzustellen ist am Sockel 7 des Schlagbechers 6 eine axial vorstehende, als Positionselement 9 dienende Nase vorgesehen und an dem Ringansatz 4 ein sich über eine dem Verdrehwinkel des Schlagbechers 6 beim Herstellen der Bajonettverbindung entsprechende Bogenlänge erstreckender Schlitz ausgeformt, welcher als Positionselement 10 dient. Dadurch wird erreicht, dass der Schlagbecher 6 nur in einer solchen Stellung auf das Gehäuse 1 aufgesetzt werden kann, in der sich das Positionselement 9 und das Positionselement 10 einander gegenüberliegend angeordnet sind. Die Längserstreckung des Schlitzes 10 erlaubt die zum Herstellen der Bajonettverbindung notwendige Verdrehung des Schlagbechers 6.

Liegt keine Bajonettverbindung vor, sondern braucht ein Behältnis mit seinem Sockel lediglich in die Aufnahmeöffnung 2 eingesteckt zu werden, dann kann dem durch eine der Querschnittsform und -größe der Nase 9 entsprechende Öffnung in dem Ringansatz 4 entsprochen werden.

Als Positionselement 9 und 10 können auch einerseits Einprägungen am Behältnis 6 und andererseits am Gehäuse 1 angeordnete Sichtzeichen oder angebrachte Anprägungen dienen. Diese Sichtzeichen oder Anprägungen liegen dann bei positionsrichtiger Aufsetzposition des Behältnisses 6 auf das Gehäuse 1 einander gegenüber.

Da beim Aufstecken des Schlagbechers 6 auf das Gehäuse 1 die Nase 9 und der Ringansatz 4 ab einer bestimmten Stellung des Schlagbechers 6 beim Einführen in die Aufnahmeöffnung 2 nicht mehr sichtbar sind, ist vorgesehen, dass an dem Schlagbecher 6 eine das Positionselement 9 anzeigende Markierung 11 und an dem Gehäuse 1 eine weitere, ebenso das Positionselement 10 anzeigende Markierung 12 vorgesehen ist, wobei diese Markierungen 11 und 12 an einer solchen Stelle angebracht sind, dass sie während des Einsteckvorganges des Schlagbechers 6 stets sichtbar bleiben.

Ist an dem auf das Gehäuse 1 aufzusetzenden Behältnis eine markante Umfangstelle, z. B. ein Handgriff vorhanden, so kann diese Umfangsstelle als Markierungselement dienen. Diese Umfangsstelle braucht dann lediglich mit der am Gehäuse 1 vorhandenen Markierung zur Deckung gebracht zu werden, um das positionsrichtige Aufsetzen des Behältnisses 6 auf das Gehäuse 1 zu vereinfachen.

## Patentansprüche

1. Küchenmaschine mit einem in dessen Gehäuse (1) eingebauten Antriebsaggregat zum Antrieb eines Wellenabtriebs (3), und mit einem Behältnis (6) wie Mixbecher, Zerkleinerungsbecher oder dergleichen, in welchem ein Werkzeug angeordnet ist, wobei das Behältnis (6) auf der mit dem Wellenabtrieb (3) versehenen Stelle des Gehäuses (1) auf dieses aufsetzbar und das Werkzeug beim Aufsetzen des Behältnisses (6) mit dem Wellenabtrieb (3) koppelbar ist, derart, daß sowohl am Gehäuse (1) als auch am Behältnis (6) wenigstens je ein Positionselement (9, 10) vorgesehen ist, welche zueinander ausrichtbar sind und beim positionsrichtig auf das Gehäuse (1) aufgesetzten Behältnis (6) zumindest einander annähernd gegenüberliegen, **dadurch gekennzeichnet, dass** die Positionselemente (9, 10) wechselseitig am Gehäuse (1) bzw. an dem Behältnis (6) angeordnet und als axial vorstehender nasenartiger Vorsprung (9) und dementsprechend am anderen Teil als Aufnahmeschlitz (10), der sich über eine dem Verdrehwinkel der Bajonettverbindung entsprechende Bogenlänge erstreckt, ausgebildet sind.

2. Küchenmaschine nach Anspruch 1, **dadurch gekennzeichnet, dass** an dem Behältnis (6) eine Markierung (11) und an dem Gehäuse (1) eine weitere Markierung (12) vorgesehen ist, wobei diese Markierungen (11 und 12) von außen sichtbar angebracht sind.

3. Haushaltsgerät nach Anspruch 2, **dadurch gekennzeichnet, dass** ein am Behältnis (6) vorgesehenes Griffelement die Markierung (11) bildet.

## Claims

1. Kitchen machine with a drive unit, which is incorporated in the housing (1) thereof, for drive of a shaft drive (3), and with a container (6) such as a mixing beaker, comminuting beaker or the like in which a tool is arranged, wherein the container (6) is placeable on the position, which is provided with the shaft drive (3), of the housing (1) thereon and the tool can be so coupled with the shaft drive (3) when the container (6) is placed on that at least one respective positioning element (9, 10) is provided not only at the housing (1), but also at the container (6), the elements being alignable relative to one another and being disposed at least approximately opposite one another when the container (6) is placed positionally correctly on the housing (1), **characterised in that** the positioning elements (9, 10) are arranged at alternate sides at the housing (1) and the container (6), respectively, and are constructed as an axially protruding, lug-like projection (9) and correspondingly at the other part as a receiving slot (10) which extends over a curve length corresponding with the rotational angle of the bayonet connection.

2. Kitchen machine according to claim 1, **characterised in that** a marking (11) is provided at the container (6) and a further marking (12) at the housing (1), wherein these markings (11 and 12) are applied to be visible from the outside.

3. Domestic appliance according to claim 2, **characterised in that** a handle element provided at the container (6) forms the marking (11).

## Revendications

1. Appareil ménager comprenant un mécanisme d'entraînement monté dans son boîtier (1) pour l'entraînement d'une sortie d'arbre (3) et un récipient (6) tel qu'un shaker, un gobelet de broyage ou similaire, dans lequel un outil est disposé, le récipient (6) pouvant être posé à l'endroit, pourvu de la sortie d'arbre (3), du boîtier (1) sur celui-ci et l'outil pouvant être couplé lors de la pose du récipient (6) avec la sortie d'arbre (3), de telle sorte que aussi bien sur le boîtier (1) que sur le récipient (6) est prévu à chaque fois au moins un élément de position (9, 10), lesquels peuvent être orientés l'un par rapport à l'autre et se font face au moins approximativement lorsque le récipient (6) est posé en position correcte sur le boîtier (1), **caractérisé en ce que** les éléments de position (9, 10) sont disposés à tour de rôle sur le boîtier (1) resp. sur le récipient (6), et **en ce qu'**ils sont réalisés comme saillie (9) de type ergot dépassant axialement et conformément sur l'autre partie comme fente de logement (10), qui s'étend sur une longueur d'arc correspondant à l'angle de rotation de la liaison à baïonnette.

2. Appareil ménager selon la revendication 1, **caractérisé en ce qu'**un repère (11) est prévu sur le récipient (6) et un autre repère (12) sur le boîtier (1), ces repères (11, 12) étant placés de façon visible de l'extérieur.

3. Appareil ménager selon la revendication 2, **caractérisé en ce qu'**un élément de poignée prévu sur le boîtier (6) forme le marquage (11).
